Europäisches Patentamt

European Patent Office

Office européen des brevets

(11) Publication number: **0 488 384 A1**

# EUROPEAN PATENT APPLICATION

(21) Application number: **91120561.5**

(22) Date of filing: **29.11.91**

(51) Int. Cl.5: **G06F 1/32**, G06F 1/00

(30) Priority: **30.11.90 KR 1954190**

(43) Date of publication of application:
**03.06.92 Bulletin 92/23**

(84) Designated Contracting States:
**BE DE FR GB IT**

(71) Applicant: **GOLD STAR CO. LTD**
**20 Yoido-Dong, Youngdungpo-ku**
**Seoul(KR)**

(72) Inventor: **Moon, Sung Won, 3-1310, Woosung**
**APT**
**Poongnap-dong, Songpa-ku**
**Seoul(KR)**

(74) Representative: **Vossius & Partner**
**Siebertstrasse 4 P.O. Box 86 07 67**
**W-8000 München 86(DE)**

(54) **Electric power saving device of a portable data terminal and its method.**

(57) Electric power saving device of a portable data terminal and its method is provided which executes a normal mode when a key signal is inputted from a keyboard (24) within an interval within a set predetermined time period, and executes a stop mode when a key signal is not inputted even when a predetermined time period is elapsed, in order to prevent unnecessary electric power consumption of the portable data terminal using mainly a direct current battery. And, an electric power saving method of the portable data terminal is provided which, in accordance with a security of the portable data terminal in response to a requirement, stores a predetermined password and at the same time executes a stop mode, and only when a password which is identical with the stored password is inputted, can convert the stop mode to the normal mode.

The present invention relates to a portable data terminal, and more particularly, relates to an electric power saving device of a portable data terminal and its method capable of efficiently controlling an electric power supply.

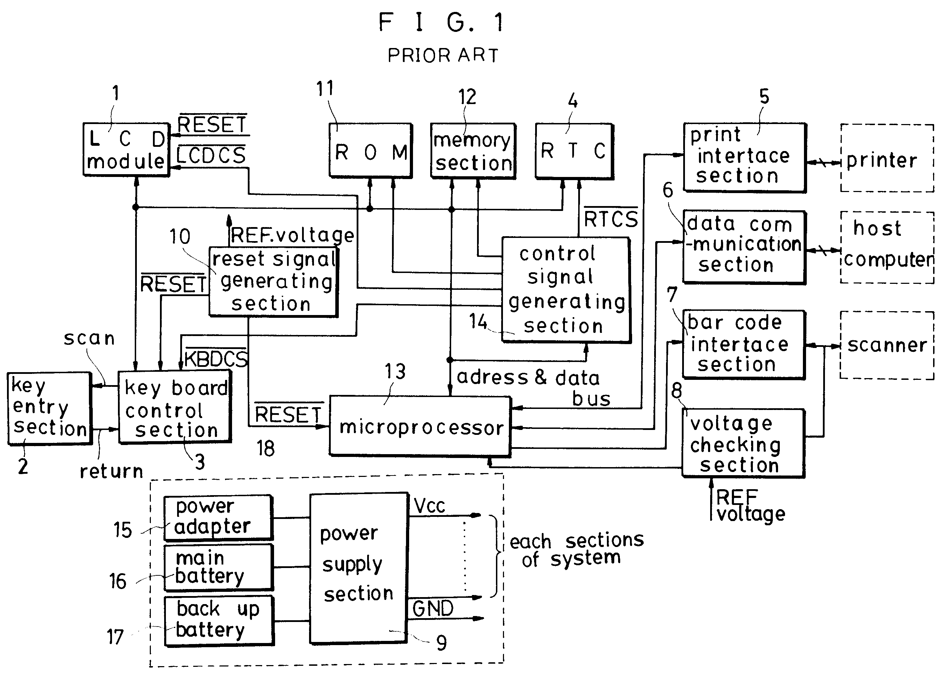

FIG. 1 shows a block diagram of general configuration of a portable data terminal for helping to understand the present invention, which comprises a liquid crystal display LCD module 1 for displaying a letter or figure by utilizing a data inputted via a system program, a key board 2 which includes a multiplicity of alphabetical letter keys or a plurality of numeral keys, a key board control section 3 for scanning and decoding a key state of the key board 2 in order to send a signal of a letter or numeral corresponding to a key pressed at the key board 2, a real time clock RTC section 4 in which a display of year, month and day and automatic leap year are possible which are for generating a time required at the portable data terminal, a printing interface section 5 for sending the data of information to print to an exterior printer, a data communicating section 6 ( e.g., uses RS-232 or uPD 4711 ) for serially transmitting to and receiving from a host computer of exterior, a bar code interface section 7 for inputting a bar code signal made by black and white bars via a separately provided bar code scanner into an interior, a voltage checking section 8 which checks a state of a battery which is a driving power supply of the portable data terminal and in case when it is lower than a reference voltage then displays the low voltage state, a power supply section 9 for supplying by converting a power supply supplied from main battery 16 as a driving power source and a back-up battery 17, and a power adapter 15 for converting an alternating current AC power from exterior to a direct current DC into a state required to each section of the portable data terminal, a reset signal generating section 10 which provides a reset signal to a microprocessor, a key board control section 3 and a LCD module, in accordance with the selection of a user, a ROM 11 for storing a system program, a memory section 12 made of a plurality of RAMs operated with an user's program, a microprocessor 13 for controlling an operation of a system by utilizing a system program stored in said ROM 11, and a control signal generating section 14 which is connected through said microprocessor 13 and an address/data bus, and inputted with address signals from the microprocessor 13 and combines these and generates a memory selecting signal and various control signals required to the system.

Here, when explaining a function of the back-up battery, it will be as followings.

Each section of the portable data terminal receives a necessary power supply from the main battery 16 or the power adapter 15.

That is, in case when a power switch (not shown) is turned on, the main power is supplied through said main battery 16 or the power adapter 15.

But, when the main power supply is turned off or a voltage level of the main power supply is lower than that of the back-up battery 17, the back-up battery 17 being of a back-up power source is automatically operated and supplies the power supply required to each section of the system so that it is made such that real time data stored to the memory 12 is maintained or a predetermined real time data is to be stored to said memory section 12.

A part corresponding to a reference numeral 18 in FIG. 1 is called as a power supply device of the portable data terminal in general.

Thus, according to the electric power supply device of the above-described conventional portable data terminal, when a power switch was turned on, a power supply section 9 made the main power source applied from a main battery 16 or power adapter 15 or a back-up power source inputted from a back-up battery 17 to each value required to each section of the system, and thereafter provided to said each section as a driving voltage until the power switch was turned off. However, in accordance with the power supply device of the above-described conventional portable data terminal, following problems had been occurred.

The portable data terminal mainly uses a battery as a power supply source on the use of the system. However, the power supply device of the conventional portable data terminal continuously feeds the electric power once the power switch is turned on, until a user turns off the main power switch and cutting off the power therefore unnecessary electric power is consumed. Accordingly, there has been the disadvantage that a duration of the battery lifetime was decreased and the battery had to be frequently changed.

And, because it had not a function for using a password, it had no security measures. That is, it had no function which stores a predetermined password such that a third person can not voluntarily use the portable data terminal when a user is absent and operates only when said stored password is inputted.

Therefore, an object of the present invention is to provide a power supply device of a portable data terminal and its method capable of preventing an unnecessary consumption of a battery by automatically operating the portable data terminal to a stop mode even if a main power switch is turned off the power in case when the portable data terminal is not used more than a predetermined time period.

Another object of the present invention is to provide a power supply device of a portable data terminal and its method cable of improving security measures by making to operate only when a predetermined control signal and a password signal are inputted in case when desiring to convert the portable data terminal from a stop mode to an operating mode.

In order to attain the above-described objects, according to the present invention, when the main power supply switch is turned on and the portable data terminal is powered on, a microprocessor operates the portable data terminal to a normal mode and then checks whether or not a key signal for operating the portable data terminal from a key board is continuously inputted.

When the key signal is not inputted for a predetermined time period, the microprocessor recognizes that the portable data terminal is not in use and operates the portable data terminal in a stop mode.

And, when a user stops for a while the use of the portable data terminal and inputs a key signal for using a predetermined password through the key board in order to execute another work, the microprocessor stores said password, and when the user inputs again said password together with a control key signal for releasing the stop mode in order to use again the portable data terminal after finishing the other work, compares the previously stored password with the later inputted password, and only when these are coincident, operates the portable data terminal in a normal mode.

The forgoing and other objects as well as advantages of the present invention will become clear by the following description of the invention with reference to the accompanying drawings.

For a better understanding of the invention and to show how the same may be carried into effect, reference will now be made, by way of example, with respect to the accompanying drawings, in which :

FIG. 1 is a block diagram of a configuration of general portable data terminal,

FIG. 2 is a block diagram of a configuration of an electric power saving device of a portable data terminal according to the present invention, and

FIG. 3 is a flow chart for showing an operation of the electric power saving device of the portable data terminal according to the present invention.

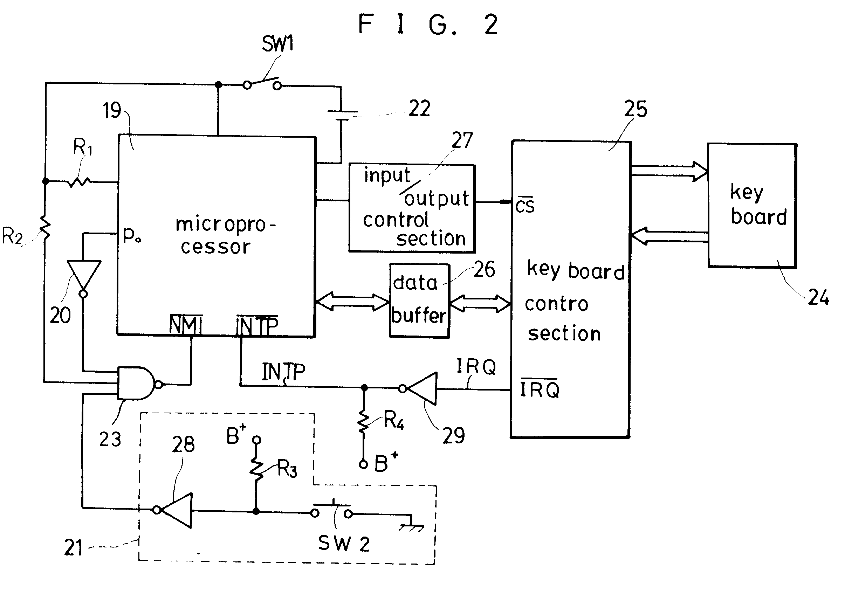

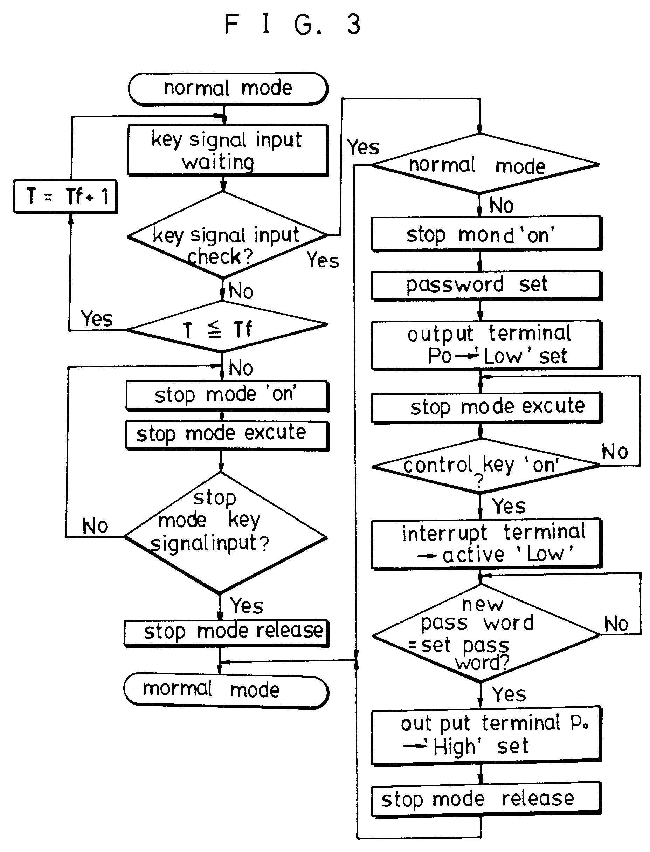

In the following, a preferred embodiment of the present invention will be explained with reference to the FIG. 2 and FIG. 3.

FIG. 2 is a block diagram of a configuration of an electric power supply control device of the portable data terminal according to the present invention, which comprises a microprocessor 19 which operates in a normal mode when a key signal for operating the portable data terminal is inputted at a state that the portable data terminal is powered on and operates in a stop mode when the key signal is not inputted more than a predetermined time period and simultaneously outputs a signal corresponding to each; an inverter 20 for inverting a signal outputted through an output terminal Po of said microprocessor 19 ; a control signal generating section 21 which outputs a key signal for releasing the stop mode by the selection of the user; a battery 22 for supplying a power source required for the portable data terminal; a main power switch SW1 for making the portable data terminal to power on or power off in accordance with the selection of the user; a NAND gate 23 which operates by AND the ON/OFF state signal of the main power switch SW1 as well as the output signal of said inverter 20 and the control signal generating section 21 and then outputs an interrupt signal corresponding to the maintaining of a normal and stop mode or the releasing of a stop mode to an interrupt terminal NMI of the microprocessor 19; a key board 24 which generates a key signal corresponding to an alphabetical letter or an arabic numeral in accordance with selection of the user; a keyboard control section 25 which decodes a key signal from said keyboard 24 and outputs to said microcessor 19; a data buffer 26 which executes a function of path for inputting and outputting the data between said microprocessor 19 and the key board control section 25; and an input/output control section 27 for controlling the data input/output between said microprocessor 19 and the key board control section 25.

Wherein, said control signal generating section 21 comprises a direct current power source B +, a switch SW2 which is connected to an end of said direct current power source B + and turned to ON/OFF in accordance with the selection of the user and outputs a predetermined signal, and an inverter 28 for inverting an output signal of said switch SW2.

In the drawings, unexplained symbol from R1 to R4 are pull up resistors, symbol B + is a direct current power source, and a reference numeral 29 is an inverter.

In the following, the operation of the configuration of said FIG. 2 will be schematically explained.

When the portable data terminal is powered on, the microprocessor 19 firstly operates in the normal mode.

But when a key signal is inputted within a set predetermined time period, checking whether the present mode recorded to a register is a normal mode or a stop mode, and when it is a normal mode, executes a process as following in accordance with the selection of the user.

That is, when the user handles the keyboard 24 and inputs by setting any voluntary "password", the microprocessor 19 stores said password to a memory of interior and then sets the output terminal Po to "Low" and operates in a stop mode.

At the same time, the microprocessor 19 judges whether or not the switch SW2 of the signal generating section 21 is turned on, and when the switch SW2 is not turned on, operates in the stop mode, and when it is turned on, the interrupt terminal NMI of the microprocessor 19 becomes to an active low state according to an output signal of the NAND gate 5.

Successively, the microprocessor 19 compares the key signal inputted through the keyboard 24 and the previously stored password, and when they are coincident, sets the output terminal Po to "High", and releases the portable data terminal from the stop mode and then operates in the normal mode.

And, when the key signal is not inputted through the key board 24 within the set predetermined time period Tf, the microprocessor 19 turns on the stop mode, and successively when the key signal is inputted, operates the portable data terminal in the stop mode.

Even when the key signal is inputted from the keyboard 24 during executing with the stop mode, when the control key signal for releasing the stop mode is not inputted from said control signal generating section 21, the microprocessor 19 executes continuously with the stop mode.

In the following, the operation according to the present invention with reference to the FIG. 3 which is a flow chart, will be explained in detail.

When the power switch SW1 is turned on and the microprocessor 19 operates in the normal mode, the microprocessor 19 outputs a "High" signal through the output terminal Po.

Said "High" signal is inverted to a "Low" signal by the inverter 20, and then inputted to an input terminal of the NAND gate 23.

Accordingly, the output signal of the NAND gate 23 is outputted constantly to "High" irrespective of ON or OFF state of the switch SW2 of the control signal generating section 21, and applied to the interrupt terminal NMI of the microprocessor 19.

Consequently, the microprocessor 19 is not executed with the interrupt and continuously operates in the normal mode.

At the same time, the microprocessor 19 operates in the normal mode as this, and checks whether or not the key input signal from the keyboard 24 is inputted by passing through in turn the keyboard control section 25 and the data buffer 26.

At this moment, when the key signal is inputted with a time interval within a previously set predetermined time period Tf, the microprocessor 19 checks whether the present state is the normal mode or the stop mode, and when it is the normal mode, continuously executes the operation of the normal mode, and when it is not, operates in the stop mode.

At this time, when the user sets any voluntary "password" and then handles the key board 24 and inputs the "password", the microprocessor 19 stores this to the interior memory.

A method that the user sets the password is as follows.

Firstly, handling the keyboard 24 and inputs a command word of SLEEP and then inputs the password by using the alphabetical key of the keyboard 24.

In order to hereafter release the stop mode, the user should input a password identical with the stored password to the microprocessor 19.

When a "password" is set, the microprocessor 19 sets the output terminal Po to "Low" and executes the stop mode.

Accordingly, the user can clear out a feeling of uneasiness that any third person may use said portable data terminal, and becomes possible to execute another business.

When the output terminal Po is set to "Low", said "Low" signal is inverted to "High" signal by the inverter 20 and then inputted to the NAND gate 23, and the NAND gate outputs a "High" or "Low" signal in accordance with the output signal of the control signal generating section 21 according to the ON/OFF of the switch SW2.

The microprocessor 19 stops an operation of an interior developing means ( which is not shown because it is an usual matter ) during when the stop mode is executed until the switch SW2 of said control signal generating section 21 becomes turned on, and maintains the data bus to a "High" impedance state, and maintains the address bus to preserve the data, and stops the execution of all system program.

That is, in a state that the power source is supplied, the microprocessor maintains the contents of the register and the interior memory as they are and minimizes a load, so that unnecessary electric power consumption is decreased. Wherein, the switch SW2 of the control signal generating section 21 can use one key at the key board 24.

When the user turns on the switch SW2 of the control signal generating section 21 during executing the stop mode of the microprocessor 19, the input signal of the inverter 28 becomes to a "Low" state and its output signal becomes from the "Low" state to a "High" state, and accordingly the output of the NAND gate 23 is changed from a "High" state to a "Low" state.

Accordingly, an active low signal is applied to the interrupt terminal NMI of the microprocessor 19 and successively the user handles the keyboard 24 and inputs the previously set "password", and the microprocessor 19 compares whether or not the presently inputted "password" coincides with the "password" which was previously set and the stored to the memory.

When the "password" is coincident, the microprocessor 19 sets the output terminal Po to "High".

At this moment, because the output of the NAND gate 23 becomes a "High" state and the terminal NMI of the microprocessor 19 does not become to an active state, the microprocessor 19 releases the stop mode and executes the operation in the normal mode.

Under the normal mode operation, the microprocessor 19 decodes the key signal inputted from the key board 24 through the data buffer 26 and the key board control section 25.

That is, when the key signal is inputted form the key board, the key board control section 25 becomes to output a "High" signal to the microprocessor 19 as an interrupt demanding signal IRQ.

Said "High" signal is converted to a "Low" signal through the inverter 28 and then inputted to the interrupt terminal INTP of the microprocessor 19.

At this moment, the microprocessor 19 processes the interrupt from the key board 24 and applies a key board chip select signal KBCS through the input/output control section 27 to a chip select signal input terminal CS of the key board control section 26, and makes the data corresponding to the key signal to be inputted through the key board control section 25 to the microprocessor 19.

On the other hand, the microprocessor 19 continuously executes the stop mode until a password that the key signal for releasing the stop mode and the previously set password are identical one another is inputted from the control signal generating section 21 after executing the stop mode accompanied with the password.

Consequently, in accordance with the present invention, when a predetermined time period Tf is elapsed which is established with a time period T which is not inputted with a key signal, the microprocessor 19 executes the stop mode and continues the execution of the stop mode until the control key signal and the corresponding password are inputted, and when a key signal is inputted within a time interval of said predetermined time Tf, executes the operation in the normal mode.

As described at above, in accordance with the present invention, following effects are obtained.

Firstly, when the portable data terminal is not used more than a predetermined time period Tf, the microprocessor automatically executes in the stop mode and thereby unnecessary electric power consumption can be prevented.

Secondly, the user may handle the switch and manually operate the microprocessor to a stop mode and thereby unnecessary consuming electric power can be descreased.

Thirdly, because a password is used when converting the portable data terminal to a stop mode, when converting again to the normal mode, an identical password together with the control key signal should be used.

Accordingly, a security measures can be improved.

It will be appreciated that the present invention is not restricted to the particular embodiment that has been described hereinbefore, and variations and modifications may be made therein without departing from the spirit and scope of the invention as defined in the appended claims.

## Claims

1. Electric power saving device of a portable data terminal which is characterized by comprising :
   (a) a data input means for inputting the data and information that a user desires ;
   (b) a system control means which, when a data is inputted from said data input means within a set reference time period, operates in a normal mode in accordance with said key signal, and when a data is not inputted for more than said set reference time period, operates in a stop mode, and simultaneously outputs a level signal corresponding to the normal mode and the stop mode ;
   (c) an electric power source supply means which supplies or cuts off the power source to the system in accordance with a level signal of said system control means and a selection of a user, and for outputting a level signal corresponding to the supplying and the cutting off ;
   (d) a control signal generating means which is turned on and off in accordance with the selection of a user and outputs a control signal corresponding to the continuation of the normal or stop mode or the stop mode release; and
   (e) a signal generating means which logically combines the level signals outputted from said system control means and a power supply means as well as the control signal generating means, and provides a signal for the continuation of the normal or stop mode or the stop mode release.

2. Electric power saving device of a portable data terminal according to claim 1, which is characterized by further comprising :
   a keyboard control means which, when a key signal is inputted from the data input means to between said data input means and the system control means, outputs an interrupt demand signal to said system control means, and thereafter decodes said key signal into a data of a predetermined form, and when a chip selecting signal is inputted from the system control means, outputting said data to the system control means.

3. Electric power saving method of a portable data terminal which is characterized by comprising in turn :

a first step which operates with a normal mode when the power is turned on ;

a second step which continues the normal mode when checking the inputted key signal and inputs within a set predetermined time period, and operates in the stop mode when the key signal is not inputted even if the set predetermined time period is elapsed ; and

a third step which executes by operating in the normal mode when the key signal for the stop mode release is inputted during the execution of the stop mode in accordance with the second step, and by continuing the normal mode when it is not inputted.

4. Electric power saving method of a portable data terminal according to claim 3, which is characterized in that said second step comprises ;

a fourth step which checks whether or not a key signal is inputted :

a fifth step which, when the key signal is not inputted, returns to said fourth step until the set predetermined time period is elapsed, and when it is inputted, checks whether the present state is the normal mode or the stop mode ; and

a sixth step which executes the stop mode when either the key is not inputted until the set predetermined time period is elapsed during said fifth step or the present state is the stop mode, when the key signal is inputted and the present state is the normal mode.

5. Electric power saving method of a portable data terminal according to claim 3 or 4, which is characterized by further comprising :

a seventh step which is inputted with a key signal during the second step, and recognizes a predetermined password in according with a key signal successively inputted when the present state is the stop mode, and stores this and thereafter excutes the stop mode ;

an eighth step which, when a key signal corresponding to the password is inputted during executing the stop mode in accordance with the seventh step, compares said key signal with said stored password ; and

a ninth step which releases the stop mode when newly inputted password is coincided with the stored password and thereafter operates with the normal mode, and when it is not coincident, continues the stop mode.

6. Electric power saving method of a portable data terminal according to claim 5, which is characterized by further comnprising a tenth step which executes the eighth step when the control key signal for releasing the stop mode is inputted during executing the stop mode in accordance with the seventh step, and continuously executes the stop mode when the control key signal is not inputted.

# F I G. 1
## PRIOR ART

EP 0 488 384 A1

# F I G. 2

EP 0 488 384 A1

EP 0 488 384 A1

# F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 285 043 (HASHIMOTO ET AL.) <br> * the whole document * | 1-4 | G06F1/32 <br> G06F1/00 |
| X | GB-A-2 064 835 (CASIO COMPUTER COMPANY LTD.) <br> * the whole document * | 1-4 | |
| Y | EP-A-0 381 021 (KABUSHIKI KAISHA TOSHIBA) <br> * the whole document * | 1-4 | |
| Y | IBM TECHNICAL DISCLOSURE BULLETIN. <br> vol. 33, no. 5, October 1990, NEW YORK US <br> pages 237 - 238; 'Interface of a low-power keyboard for lap-top computers' <br> * the whole document * | 1-4 | |
| A | PATENT ABSTRACTS OF JAPAN <br> vol. 12, no. 303 (P-746)18 August 1988 <br> & JP-A-63 075 871 ( MATSUSHITA ELECTRIC IND. CO. LTD. ) 6 April 1988 <br> * abstract * | 1-6 | |
| A | DE-A-3 826 136 (EXPERT ELECTRONIC CO. LTD.) <br> * the whole document * | 5,6 | TECHNICAL FIELDS SEARCHED (Int. Cl.5) <br><br> G06F |
| A | PATENT ABSTRACTS OF JAPAN <br> vol. 11, no. 203 (P-591)2 July 1987 <br> & JP-A-62 025 308 ( FANUC LTD. ) 3 February 1987 <br> * abstract * | 5,6 | |
| A | PATENT ABSTRACTS OF JAPAN <br> vol. 9, no. 116 (P-357)21 May 1985 <br> & JP-A-60 003 712 ( MATSUSHITA DENKI SANGYO K.K. ) 10 January 1985 <br> * abstract * | 5,6 | |

The present search report has been drawn up for all claims

| Place of search | Date of completion of the search | Examiner |
|---|---|---|
| BERLIN | 18 MARCH 1992 | DURAND J. |

EPO FORM 1503 03.82 (P0401)